Europäisches Patentamt

(19) European Patent Office

Office européen des brevets

(11) Publication number: **0 021 783**
**B1**

(12) **EUROPEAN PATENT SPECIFICATION**

(45) Date of publication of patent specification: **15.08.84**

(51) Int. Cl.³: **H 04 N 5/76, G 11 B 7/26**

(21) Application number: **80302045.2**

(22) Date of filing: **17.06.80**

(54) Recorder, player, method of recording and video record.

<table>
<tr><td>(30) Priority: <b>20.06.79 US 50188</b></td><td>(73) Proprietor: <b>DISCOVISION ASSOCIATES<br>P.O. Box 6600 3300 Hyland Avenue<br>Costa Mesa California 92626 (US)</b></td></tr>
<tr><td>(43) Date of publication of application:<br><b>07.01.81 Bulletin 81/1</b></td><td>(72) Inventor: <b>Broadbent, Kent D.<br>2244, Daladier Drive<br>Rancho Palos Verdes California 90274 (US)</b></td></tr>
<tr><td>(45) Publication of the grant of the patent:<br><b>15.08.84 Bulletin 84/33</b></td><td></td></tr>
<tr><td>(84) Designated Contracting States:<br><b>AT BE CH DE FR GB IT LI LU NL SE</b></td><td>(74) Representative: <b>Arthur, George Fitzgerald et al,<br>KILBURN & STRODE 30, John Street<br>London WC1N 2DD (GB)</b></td></tr>
<tr><td>(56) References cited:<br><b>DE - A - 1 537 193<br>DE - A - 2 207 046<br>DE - A - 2 621 995<br>DE - B - 2 462 056<br>FR - A - 2 295 661<br>US - A - 3 723 644</b></td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates generally to video recording and reproducing systems, and, more particularly, to such systems utilizing compression techniques for increasing the effective amount of video information that can be stored on, or retrieved from, a recording disc.

Various systems are available for recording signals at video frequencies on discs, tapes and other media, utilizing optical, magnetic, and other techniques. In particular, some disc recording systems utilize a radiant energy beam to effect an irreversible change to the disc surface, and thereby write information on the surface for later reproduction. Information can be recorded on a disc in the form of a continuous spiral track, in which case a recording transducer is continually translated in a radial direction as the disc is rotated. It is also possible to record video or non-video information in concentric circular recording tracks on a disc.

In order for video disc players to be competitive with video tape machines, the video discs employed should be capable of storing reasonable lengths of program material. Without some form of compression of the video information, the total amount of information that can be stored on a given disc is limited by the diameter of the disc, the width of the recorded track, and the lineal data density that can be written and reproduced by the system.

Video information can be recorded in a compressed form on a disc. In this prior technique, instead of recording all of the video information only one out of a predetermined number of successive sequential video frames is recorded. For example, a compression ratio of two-to-one is obtained if alternate frames can be recorded, and the data storage requirement is then reduced by fifty percent. On playback, each recorded frame is reproduced twice, and provision is made to preserve the audio information corresponding to all of the original frames of video information.

When the video image changes very rapidly, it would be more satisfactory to record and reproduce every frame of the program in sequence. Similarly, there may be other occasions when there is practically no change in picture content over several consecutive frames, in which case a compression ratio of even greater than two-to-one would be desirable. Consequently, there has existed, until the present invention, a need for a more versatile video compression system. The present invention satisfies this need.

The present invention resides in a recording and reproducing system in which the video content of a recording is selectively compressed in accordance with the rate of change of the video picture content. The video information can be compressed by a compression ratio that can be varied between a relatively high value, when the picture content is changing slowly, to a value of unity, when the picture content is changing rapidly.

Briefly, and in general terms, the recording system of the invention includes a video disc recording device, audio processing means for producing a plurality of audio channels delayed in time with respect to each other by increments of one video frame-time, and video processing means for generating a recorder enabling signal for each frame of an original video program that is to be recorded, and for generating a frame repeat count indicative of the number of times that each recorded frame is to be repeated during subsequent playback of the recording. The recording system also includes means for coupling the recorder enabling signal to the disc recording device, such that the device is enabled only for those frames that are to be recorded, and means for combining the plurality of audio channels with the video information to be recorded, such that a composite video and audio signal is recorded on the disc.

In German Patent Specification No. 2621995 a similar object is achieved by relying upon the use of delay circuits in order to introduce a two frame period delay in the video signal. This delay is absolutely essential to the operation of the cited device and any other conceivable device which operates on a one-pass real-time basis. The delays are essential because of the need to compare the entire first frame with the entire second frame before it is possible to make the decision of whether or not the first frame is to be recorded. While one frame period delays are certainly available, and the disclosed device is therefore possible to construct, such delays are extremely expensive and result in some noticable video quality degradation.

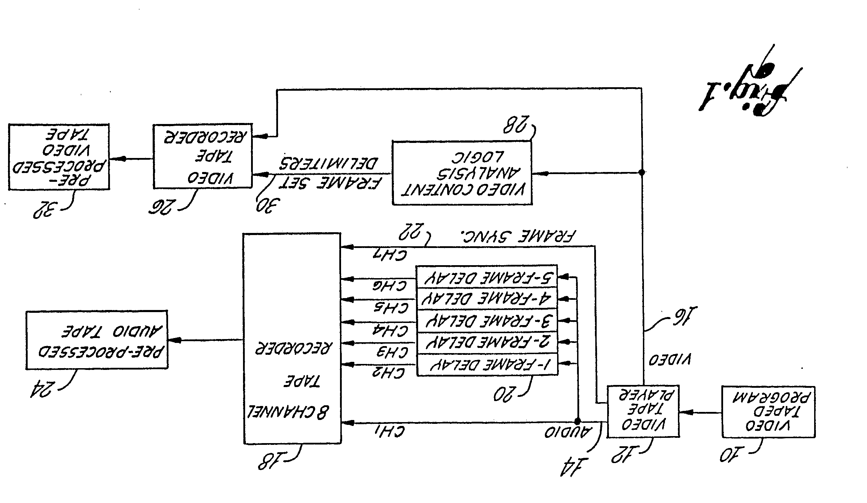

The disclosed German system also employs a recirculating one frame period delay of the audio signal (delay 37 of Figure 1). Any such delay line will degrade the signal quality of the audio signal, particularly when the signal is recirculated through that delay time after time. While this reduction in quality could perhaps be made up for by other circuitry (not disclosed in the German application), this correction is complicated by the fact that each time the signal is recirculated through the delay, it is summed with a further audio signal corresponding to a further frame of video information.

Accordingly, when the signal finally emerges from the delay to be chanelled to the disc, a portion of the signal has been through the delay only once and a portion of the signal may have been recirculated through the delay up to 5 times. When these signals are played back end to end, cyclic patterns of background noise and distortion may be apparent which will be very hard.

In accordance with the method according to the present invention, the programme is first analysed to determine which frames need to be recorded, and which can be skipped, and then a video tape is prepared containing all of the original frames, and including boundary signals separating sets of similar frames; the tape is subsequently played back to make the video recording including frame repeat counts, by use of the recorder enabling signals and the boundary signals.

This two step process of first recording the boundary signals on the video tape and subsequently playing back the video tape with its boundary signals which avoids the need for costly video delay circuits, and the signal degradation caused by them which are disadvantages of the prior art system discussed above.

The invention includes in addition to such a method a video recorder for carrying that method out, a video record made by such a method, and a player for a video record made by such a method.

Figure 1 is a block diagram of apparatus for pre-processing a video programme to be recorded in accordance with the present invention;

Figure 2 is a block diagram of a recording system for generating a master disc in accordance with the principles of the present invention;

Figure 3 is a simplified schematic and block diagram of a reproducing system constructed in accordance with the principles of the present invention;

Figure 4 is a diagram showing the timing relationships between the original video and audio signals to be recorded, pre-processed video and audio signals, and a record-enable signal generated in the recording system of the invention;

Figure 5 is a diagram showing the sequence of recorded video and audio frames after compression, as recorded on a video disc;

Fig. 6 shows the waveform of a frame synchronzation signal and a frame repeat count encoded in a vertical blanking interval of a composite video and synchronization signal; and

Fig. 7 is a diagram showing the timing relationships between a read/repeat signal generated in the reproducing system of the invention, and the contents of a memory device in the reproducing system.

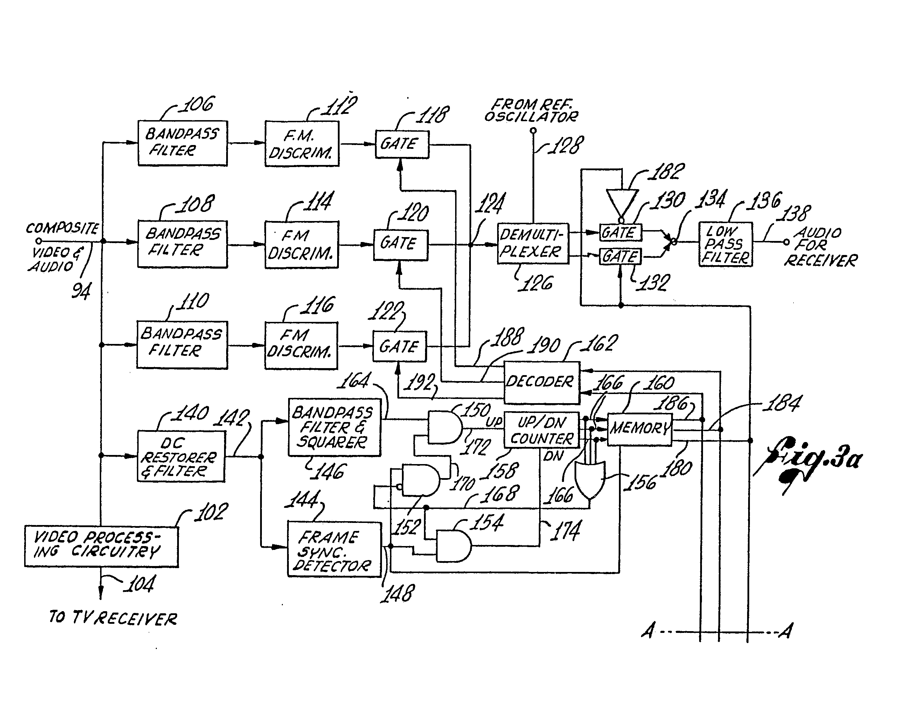

As shown in the drawings for purposes of illustration, the present invention is concerned with a video recording and reproducing system in which the video portion of the signal to be recorded can be selectively compressed for purposes of recording on a disc. As best shown in Fig. 4, a conventional video signal comprises a sequence of video frames of information, where each frame represents a complete scan of a video picture. Conventionally, a frame includes two interlaced fields, where one such field is formed by scanning odd-numbered lines of the frame and the other field is formed by scanning even-numbered lines. Many video programs contain relatively long periods during which there is little or no change in picture content, as when still scenes are being displayed. Recording space on a disc can be conserved if only a single frame is recorded to represent a number of consecutive frames of practically the same content, and the frame is subsequently reproduced several times to simulate the original video program.

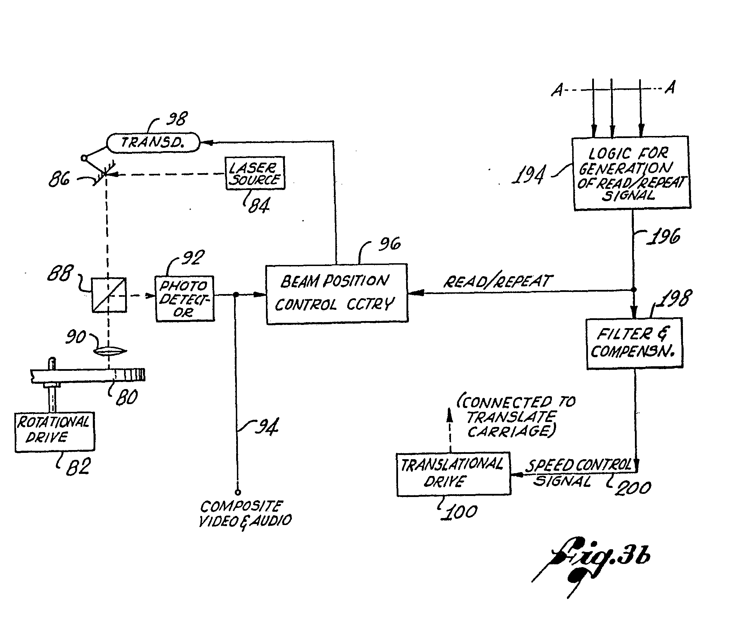

In accordance with the present invention, each frame of video information recorded on a video recording disc has encoded with it a frame repeat count indicative of the number of times that the recorded frame is to be repeated during the reproduction phase. Thus, as shown in Fig. 5, frame #3 is to be repeated twice, frame #9 five times, frame #13 three times, frames #14 and #15 not repeated at all, and frame #20 repeated four times. It will be apparent that, in the example shown, the first twenty frames of the video program have been compressed to six frames. Naturally, the overall ratio by which the video information can be compressed will depend upon the content of the program. Programs such as fast moving sports events may not be suitable for compression at all, while other programs may yield compression ratios of three or more, depending upon the program content and the maximum number of times that a frame may be repeated. As also indicated in Fig. 5, multiple channels of audio information must be recorded with each frame of video information. Thus, for example, there must be recorded with video frame #3 the audio information for frames #1, #2 and #3.

It is contemplated that the principles of the invention could be implemented in a variety of specific embodiments. In the embodiment shown, however, a video program in taped form, indicated by reference numeral 10 in Fig. 1, is first reproduced on a video tape player 12, from which is obtained an audio signal on line 14 and a video signal on line 16. The audio signal on line 14 is transmitted to the first channel of an eight-channel audio tape recorder 18, and is also transmitted to a plurality of time delay circuits 20, and thence to other channels of the audio tape recorder. In the example shown, there are five such delay devices 20, having one, two, three, four and five frame delay times, respectively. Thus, the audio signals recorded on channels 2—6 of the tape recorder 18 are delayed by one, two, three, four and five frame times, respectively. A seventh channel of the audio recorder 18 is used to record a frame synchronization signal, as indicated by line 22 from the video tape player 12 to the recorder 18. This synchronization signal is used in a subsequent step to synchronize operation of the eight-channel recorder 18 with a tape player. The eight-channel tape produced by the recorder 18 is indicated by reference numeral 24.

The video signal on line 16 is transmitted directly to a video tape recorder 26, and is also transmitted to video content analysis logic 28. Clearly, there are at least two possible techniques for analyzing the content of the video picture in order to determine how the program may be compressed into a lesser number of frames. In the simplest, although not the most efficient technique, the logic 28 would include a video editing device, which would allow the tape in the player 12 to be stopped, started or reversed, so that the picture content of each frame could be examined carefully and compared with the picture content of prior and subsequent frames. The logic 28 also includes means for generating a flag or delimiter signal that is encoded with the video signal in the recorder 26, as indicated by line 30. The delimiter can be in the form of a high-frequency signal placed in a particular position in the vertical blanking interval preceding a frame. Presence of the delimiter indicates that the next following frame is the last one of a set of frames considered to be similar enough that they may be represented by a single frame, to be later reproduced the same number of times as there are frames in the set. The video tape recorder 26 thereby produces a pre-processed video tape 32 containing exactly the same video information as the original taped program 10, but having frame set delimiters encoded with the video information, to indicate the last frames of the frame sets defined as a result of the operation of the analysis logic 28.

In a more automated system, the video content analysis logic 28 could be made entirely automatic. Various signal processing systems are available for detecting motion in a video picture, and one of these could be readily adapted to generate frame set delimiters on line 30 in accordance with the detected changes in the picture content. If such a system were employed, the transfer of information from the video tape player 12 to the pre-processed tape 32 could be accomplished in real time, at full speed of operation of the player and recorder. When the aforedescribed manual system of picture content analysis is employed, the video tape player 12 and the video tape recorder 26 are operated on an intermittent basis while the content analysis is being performed, and the generation of the pre-processed audio tape 24 can then be more conveniently performed as a separate operation from that of generating the pre-processed video tape 32.

Fig. 4 indicates the relationship between the original video and audio signals, and the pre-processed video and audio signals. It will be seen that the pre-processed video signal is identical to the original video signal, on a frame-to-frame basis, except that the pre-processed video signal contains delimiting flags, each indicated by a dot preceeding the final frame in each frame set that is to be represented by a single frame. Thus, for example, frame #3 includes a frame set delimiter, indicating that frames #1, #2, and #3 are to be represented by frame #3 repeated twice, i.e., played three times. It will also be apparent from Fig. 4 that the second channel of pre-processed audio information is delayed one frame-time from the first, that the third channel is delayed one further frame-time from the second, and so on. Thus, the third frame of pre-processed audio information, i.e., the frame corresponding to the third frame of pre-processed video information, contains original audio frames #3, #2 and #1 of audio information. As will be seen later, when frame #3 of the original video signal is reproduced for the first time, frame #1 of the audio signal is reproduced, then when frame #3 is repeated for second and third times, frames #2 and #3, respectively, of the audio information are reproduced. In similar fashion, it will be apparent that when frame #9 of the original video signal is reproduced, it will be played a total of six times, and the audio information that accompanies it will be frames #4—9 of the original audio information, all of which are recorded in a single compressed frame with frame #9 of the video information, as shown in Fig. 5.

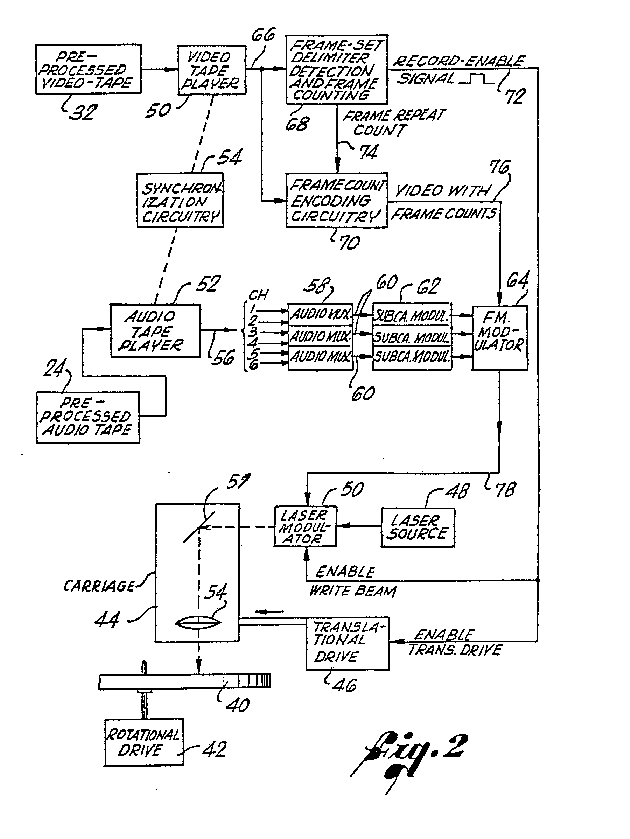

Fig. 2 illustrates how the pre-processed video tape 32 and the pre-processed audio tape 24 are transferred to a master recording disc, indicated at 40. The disc 40 is rotated at a constant speed by a rotational drive 42, and has associated with it a radially translatable carriage 44, moved by a translational drive 46. In the recording system shown, a laser light source 48 produces a coherent light beam, the intensity of which is modulated by a laser modulator 50. The modulated light beam is reflected from a mirror 52 and passed through an objective lens system 54, which focuses the beam on the surface of the disc 40. The surface of the disc 40 is physically altered in some manner by the impingement of the beam thereon, such as by the formation of depressions in the surface. The mirror 52 and the objective lens system 54 are disposed on the carriage 44, and the light beam from the laser modulator 50 is directed at the mirror 52 in a radial direction with respect to the disc 40. Accordingly, movement of the carriage 44 in a radial direction at a constant speed results in a spiral recording track being formed on the disc 40. Typically, a frame of video information is recorded during one complete revolution of the disc 40.

The pre-processed video tape 32 is reproduced on a video tape player 50, the pre-processed audio tape 24 is reproduced on an audio tape player 52, and synchronization circuitry 54 is provided to synchronize operation of the video tape player and audio tape player. This is accomplished by means of the frame synchronization signal recorded on channel seven of the pre-processed audio tape 24 during pre-processing of the audio signals.

It will be appreciated that, as an alternative to the preprocessing steps described with respect to Fig. 1, the required six audio channels could be produced at the time the master disc is recorded. The pre-processed video tape 32 would also contain all of the original audio information, which could be reproduced in the tape player 50 and processed by time delay circuits similar to the circuits 20 in Fig. 1. The resultant six audio channels would then be utilized in the same way as the six outputs from the audio tape player 52. In this embodiment of the invention, the synchronization circuitry 54 would not be required.

The audio tape player 52 in Fig. 2 reproduces the six channels of audio information, as indicated by line 56. These six channels are transmitted to three audio multiplexers 58, each of which time-division multiplexes two of the audio channels. Three multiplexed audio signals are thereby derived on lines 60 from the audio multiplexers 58, and are transmitted to three subcarrier modulators 62, and thence to an fm modulator 64.

Simultaneously with the processing of the audio information as described, the video tape player 50 produces a video signal on line 66, which is connected to logic 68 for detecting frame set delimiters and for performing frame counting operations, and is also connected to frame count encoding circuitry 70. The logic in block 68 detects the frame set delimiters, which were encoded with the video signal by the pre-processing circuitry shown in Fig. 1. Whenever a delimiter is detected, a record-enable signal is generated on line 72 for the duration of the frame in which the delimiter was encoded. A typical waveform of the record-enable signal is shown in Fig. 4, and it will be seen that the signal is generated during frames #3, #9, #13, #14, #15 and #20, these being the only frames at the beginning of which a delimiter is encoded.

The record-enable signal on line 72 is transmitted to the laser modulator 50, where it is operative to enable transmission of the light beam from the modulator. When the enable signal is in a low state, as illustrated in Fig. 4, no light is emitted from the laser modulator 50, and recording is suspended. The record-enable signal on line 72 is also connected to the translational drive 46, so that the drive 46 moves the carriage 44 only when the record-enable signal is in a high state, indicating that a frame is to be recorded. It will be appreciated, therefore, that recording is permitted to take place only during those frames flagged by the delimiter signal, as indicated in Figs. 4 and 5.

The frame set delimiter detection logic also generates a frame repeat count on line 74, and this is conveyed to the frame count encoding circuitry 70. This circuitry encodes the frame repeat count in the vertical blanking interval preceding each frame. This encoding may be accomplished in a variety of ways, but one convenient technique is to insert bursts of a high-frequency signal in a selected line of the vertical blanking interval. As shown in Fig. 6, line #11 of the vertical blanking interval preceding a frame is used for storage of a frame synchronization flag, and line #12 is used for storage of the frame repeat count. Any convenient frequency for these signals could be employed, 115 kilohertz being suggested as a convenient figure. By way of illustration in Fig. 6, there are five bursts of the signal, indicating a repeat count of five, such as would be stored in the blanking interval preceeding frame #9, as indicated in Fig. 5.

The frame count encoding circuitry 70 generates on line 76 a video signal equivalent in most respects to the original video signal, but with frame counts stored at the beginning of the last frame of each selected frame set. In the example given in Figs. 4 and 5, the frame counts would be stored at the beginning of frames #3, #9, #13, #14, #15 and #20. The frame synchronization signal also shown in Fig. 6 can be inserted either by the frame count encoding circuitry 70, or by the pre-processing circuitry shown in Fig. 1.

The video signal on line 76 from the frame count encoding circuitry 70 is passed to the fm modulator 64, together with the audio signals from the subcarrier modulators 62. The modulator 64 generates a composite video and audio signal on line 78, which is coupled to the laser modulator 50 to modulate the light beam from the laser source 48. It will be appreciated that the video signal on line 78 is not compressed in any way. Compression is effected by means of the record-enable signal on line 72. As already mentioned, this signal has the effect of enabling the light beam only during selected frames, and simultaneously enabling the translational drive 46 to move the light beam radially across the disc 40 during the same selected frames. The resultant recording of the master disc 40 is in the format shown in Fig. 5. Only frames #3, #9, #13, #14, #15 and #20 are recorded, together with corresponding audio information as shown in Fig. 5. It will be understood that production recordings can be made from the master disc 40 by processes that form no part of the present invention, and that these production recordings can be made available to the public for reproduction on a suitably modified reproducing system, as will now be discussed in relation to Fig. 3.

The video disc reproducing system is similar in many respects to the master recording system described in Fig. 2. A disc 80 on which has been recorded the compressed video and audio information, as described with respect to Fig. 2, is rotated at a constant speed by a rotational drive 82. A laser source 84 directs a coherent light beam, referred to as the reading beam, onto a mirror system 86, and thence through a prism 88 and an objective lens system 90, to impinge on the disc 80. In the reproduction process, the reading beam is selectively reflected from the disc, depending on the information content recorded thereon, and light reflected from the disc is reflected out of the path of the reading beam by the prism 88, and thence into a photodetector system 92, from which is derived a composite video and audio signal, on line 94. Since there may be eccentricity and other errors in the production disc 80, the signal from the photo-detectors 92 is also processed by beam position control circuitry 96, one function of which is to maintain the reading beam centered as closely as possible on the recording track, by means of a transducer 98 coupled to make continual adjustments to the mirror system 86, in order to direct the reading beam appropriately onto the surface of the disc 80. The mirror system 86, the prism 88 and the objective lens system 90 are all disposed upon a carriage (not shown), which is translated radially by a translational drive 100.

The composite video and audio signal derived from the disc 80 is connected to conventional video processing circuitry 102, which effects demodulation of the signal, after which it may be passed directly to a television monitor, or may be remodulated, if it is to be transmitted to a conventignal television receiver, as indicated by line 104. The composite video and audio signal on line 94 is also connected to three bandpass filters 106, 108 and 110, from which are obtained the three modulated subcarriers containing the six channels of audio information. The outputs of the bandpass filters 106, 108 and 110 are passed to three corresponding fm discriminators 112, 114 and 116, which demodulate the respective signals on the three subcarriers. The outputs of the discriminators 112, 114, and 116 are then passed through corresponding gates 118, 120 and 122, and thence to a junction 124, which is connected to provide an input signal to a demultiplexer 126. As will be explained shortly, the gates 118, 120 and 122 are selectively operated such that only one gate is opened or turned on at any given time, and only one of the selected demodulated audio signals is passed to the demultiplexer 126. The demultiplexer 126 employs a reference signal from a reference oscillator, as indicated by line 128, and supplies two demultiplexed audio outputs to two additional gates 130 and 132, respectively. The outputs of these gates are connected to a common junction point 134, and thence to a low-pass filter 136. The low-pass filter 136 reduces noise, and filters out any contribution from the audio subcarriers. The output of the filter 136, on line 138, may then be remodulated for transmission to a conventional television receiver, along with the video signal on line 104.

The composite video and audio signal on line 94 is also transmitted to a dc restorer and filter circuit 140, the output of which, on line 142, is utilized to detect frame synchronization signals, in block 144, and to detect frame repeat counts, in a bandpass filter and squarer circuit 146. The frame synchronization detector 144 generates an output on line 148 upon the detection of a frame synchronization signal in the vertical blanking interval of the video signal received. This synchronization signal and the count derived in the bandpass filter and squarer circuit 146 are processed by additional logic comprising three AND gates 150, 152 and 154, an OR gate 156, an UP/DOWN counter 158, a binary memory circuit 160, and a binary-to-decimal decoder 162.

The frame synchronization signal on line 148 is applied as an input to AND gate 152, and as an input to AND gate 154, and the output of the bandpass filter and squarer 146 is applied as an input to AND gate 150, over line 164. The UP/DOWN counter 158 is a three-bit counter having three output lines 166 connecting the counter to the memory 160, and also supplying three inputs to the OR gate 156. The output of the OR gate 156, on line 168, is applied as a second input to AND gate 154, and is inverted and applied as a second input to AND gate 152. The output of AND gate 152, on line 170, is applied as an input to AND gate 150, the output of which, on line 172, is connected to the UP counting terminal of the UP/DOWN counter 158. The output of AND gate 154, on line 174, is connected to the DOWN counting terminal of the counter 158.

In operation, the UP/DOWN counter 158 is counted in an upward sense by encoded frame repeat count pulses detected in the bandpass filter and squarer 146, and is counted in a downward sense by subsequent frame synchronization pulses passing through the AND gate 154. More specifically, when the UP/DOWN counter 158 contains a zero count, the output of OR gate 156 will be zero, and this will enable AND gate 152 to pass a horizontal synchronization pulse over line 170, thereby enabling AND gate 150. The horizontal synchronization pulse generated on line 148 is of long enough duration to enable AND gate 150 during the occurrence of frame repeat count pulses generated in the bandpass filter and squarer. The bandpass filter and squarer 146 detect the frame repeat count pulses, and generates therefrom square-shaped pulses to count the UP/DOWN counter 158 in an upward direction when applied over line 172. Accordingly, when the UP/DOWN counter is zero, and the frame repeat count is detected, the counter 158 is counted upwardly by the amount of the encoded repeat count.

It will be appreciated that the logic diagram shown in Fig. 3 is somewhat simplified, and that appropriate conventional timing and signal shaping circuitry would be needed, for example, to ensure that the signal on line 168 from the OR gate 156 persisted for long enough to allow gating of the frame repeat count pulses into the UP/DOWN counter 158.

On the occurrence of the next frame synchronization pulse on line 148 after detection of a frame repeat count, there will be a non-zero value in the UP/DOWN counter 158, and therefore a non-zero signal on line 168 from the OR gate 156. Accordingly, AND gate 154 will be enabled, and the horizontal synchronization pulse will be gated through AND gate 154 and over line 174 to count the UP/DOWN counter in a downward direction. The same chain of events will occur for subsequent horizontal synchronization pulses on line 148, until such time as the UP/DOWN counter 158 is counted down to a zero value, at which time a new frame repeat count will be gated through AND gate 150, to count the UP/DOWN counter upwardly again.

Frame synchronization pulses on line 148 are also utilized to gate the contents of the UP/DOWN counter 158 into the memory 160, where it can be utilized to select an appropriate audio channel for reproduction, and to generate a read/repeat signal for control of the reading beam in the disc reproduction system. More specifically, the least significant digit of the count in the memory 160 is utilized to select one of the gates 130 and 132 located in the lines from the demultiplexer 126. This least significant bit output of the memory, indicated on line 180, is connected directly to the gating terminal of gate 132, and is also connected through an inverter 182 to the gating terminal of gate 130. Thus, when the count in the memory 160 is even-numbered, gate 130 is enabled, and when the count in the memory is odd-numbered, gate 132 is enabled. The two higher-order bits in the memory 160, as indicated on output lines 184 and 186, are connected to the input of the binary to decimal decoder 162, which produces an output signal on one of three output lines 188, 190 and 192. These output lines are connected to the gating terminals of gates 118, 120 and 122 respectively, so that a count of zero or one in the memory 160 will enable gate 118, while a count of two or three will enable gate 120, and a count of four or five will enable gate 122. In this manner, the count in the memory 160 determines which of gates 118, 120 and 122 will be enabled, and which of gates 130 and 132 will be opened, in order to select the correct audio frame for reproduction with a corresponding video frame.

The contents of the memory 160, on lines 180, 184 and 186, are also supplied to logic for generation of a read/repeat signal, indicated in block 194. This signal determines whether the disc reading apparatus should read the next frame recorded on the disc, or should repeat reading of the same frame over again.

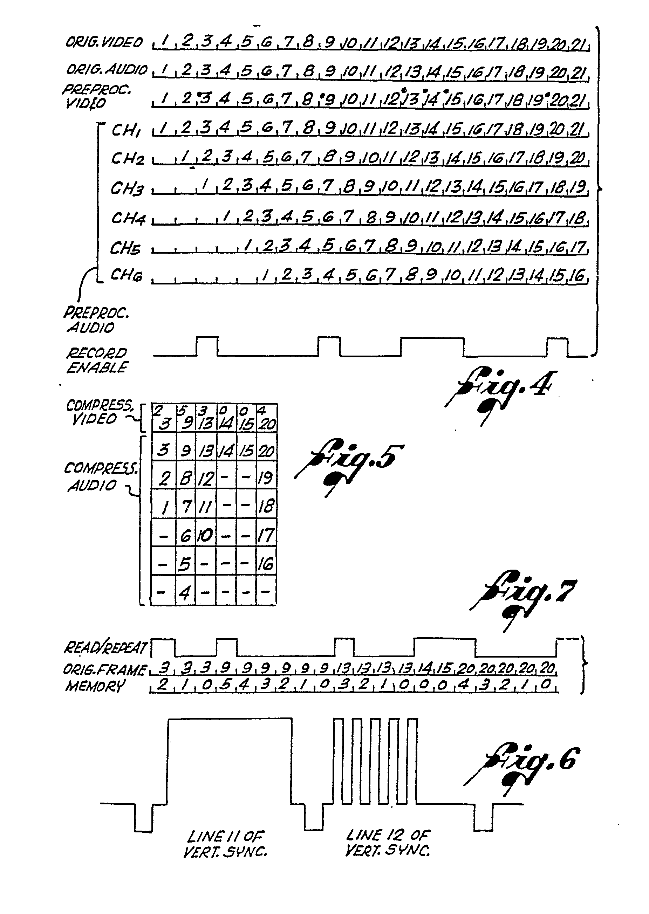

Fig. 7 shows a typical waveform of the read/repeat signal, using the same example of the compressed video signal that was shown in Fig. 5. Immediately below the read/repeat signal is the corresponding number of the original frame from which the recording is derived, and immediately below that are the corresponding counts in the memory 160 during the playback operation. For the purpose of reading the first frame of data from the disc the read/repeat signal is in the "read" state initially, then changes to the "repeat" state for the subsequent two frames, during which original frame #3 is repeated two additional times. Next, the read/repeat signal changes to the "read" state in order to read frame #9 from the disc, and then reverts to the "repeat" state for the subsequent five frame times, during which the same frame is repeated five times. This read/repeat signal is transmitted over line 196 to the beam position control circuitry 96, which, in addition to its other functions, directs the mirror 86 and the reading beam to either read the next track and frame on the disc, or to repeat reading of the last frame to be reproduced.

The read/repeat signal on line 196 is also processed by a low-pass filter and other compensation circuitry in block 198, for generation of a speed control signal, on line 200, for application to the translational drive 100. It will be appreciated that the read/repeat signal represents the speed control signal that should theoretically be applied to the translational drive 100 in order to translate the beam across the disc. However, a precise stopping and starting function for the translational drive 100 would be impractical to implement at low cost for a consumer product of the type contemplated, so the read/repeat signal is first low-pass filtered to eliminate any rapid changes in the speed control signal to be applied to the translational drive over line 200. Since a filtered signal is used to control the translational drive speed, the translational drive 100 will not then exactly follow the desired variations in radial position of the reading beam. However, positional errors caused by this technique can be compensated for by appropriate movements of the mirror 86, as controlled by the beam position control circuitry 96. The mirror 86 can be pivoted through a large enough angle to swing the beam through a distance corresponding to as many as 15 to 20 tracks, so that the translational drive 100 can lead or lag the theoretical desired radial displacement by this amount.

It will be appreciated that the invention described herein represents a significant advance in the field of video recording generally, and more particularly in video disc recording and reproducing systems. The invention provides for the production of disc video programs with significantly longer program times than would otherwise be obtainable, and makes efficient use of the storage space on a disc by eliminating redundant video information from the original program, all without significant loss of program content. In addition it provides a related technique for preserving a continuous audio information signal in compressed form, and recreating the continuous audio signal during the reproduction phase.

## Claims

1. A video recorder comprising a recording head (44); a drive (42, 46) for moving the head with respect to a record (40); a video signal processer arranged to produce a recorder-enabling signal (72) during each frame of an original video program that is to be recorded and a frame repeat count (74) indicative of the number of times that each such frame is to be played during subsequent reproduction; an audio signal processor (20) for producing a plurality of audio channels delayed in time with respect to each other by increments of one frame time; means (64) for combining the plurality of audio channels with the original video program and the frame repeat count, and means for selectively enabling said drive and said head in accordance with the state of the recorder enabling signal, characterised in that the video signal processor includes: an analyser (28) of the original video program arranged to determine which frames shall be recorded, and how many times each such frame is to be played, in dependence on the amount of movement in the corresponding part of the program; means (Figure 1) for producing a pre-processed video program (32) on video tape and containing an indication of boundaries between selected sets of consecutive frames as determined by the analyser; means (50) for subsequently playing back the pre-processed video program from the video tape; means (68) for counting the frames in each set of the played-back pre-processed video program and generating a frame repeat count for each set and the recorder enabling signal for each set; and means for encoding the frame repeat count with the played-back pre-processed video program.

2. A video recorder as claimed in Claim 1 wherein the means for combining the plurality of audio channels with the original video program and the frame repeat count, comprises: a plurality of audio multi-plexers (58) for multiplexing pairs of said audio channels, a plurality of subcarrier modulators (62) each of which modulates a multiplexed pair of said audio-channels, and a modulator (64) for combining the modulated subcarrier signals with the video signal containing encoded frame repeat counts.

3. A video recorder as claimed in either of the preceding claim where: said recording head includes a laser light source (48) and a laser modulator (50) for producing a laser writing beam for writing on a recording disc said drive means includes rotational drive means (42) for rotating said disc and translational drive means (46) for translating the writing beam radially with respect to said disc.

4. A method of making a video recording comprising the steps of: processing a video program (10) to produce a recorder-enabling signal (72) during each frame of the program that is to be recorded, together with a frame repeat count (74) indicative of the number of times, if any, that each recorded frame is to be repeated during subsequent reproduction; generating from an audio signal (14) accompanying the video program, a plurality of audio channels delayed in time with respect to each other by increments of one frame time; electrically combining selected frames of the video program, the plurality of audio channels, and the frame repeat counts to produce a composite electrical signal; applying the composite electrical signal to a recorder (50); and selectively enabling the recorder in accordance with the recorder-enabling signal (72), to record the selected frames of the video program each with one or more of the audio channels, whereby when a recorded frame is replayed, a selected one of the audio channels can be simultaneously reproduced in accordance with the frame repeat count; characterised in that the program is first analysed to determine which frames need to be recorded and which can be skipped; and characterised by preparing a video tape containing all of the original frames and including boundary signals separating sets of similar frames; and characterised by subsequently playing back the tape to make the video recording including frame repeat counts by use of the recorder-enabling signals and the boundary signals.

5. A method as claimed in Claim 4 wherein the frame repeat counts are inserted in vertical blanking intervals of the combined signal by generating high-frequency signal bursts and combining the signal bursts with pre-processed video signal in a selected line of the vertical blanking interval.

6. A record made by a method as claimed in Claim 4 or Claim 5 and carrying a video recording containing successive frames of video information, frame repeat counts, each indicative of the number of times a recorded frame is to be reproduced, and a plurality of audio channels delayed in time with respect to each other by increments of one frame time recorded with each frame of video information which is to be repeated in a manner enabling the appropriate audio channel to be selected for reproduction with each reproduction of a recorded frame, characterised in that the audio channels are time multiplexed in pairs.

7. A record as claimed in Claim 6 in which the frame repeat counts are contained in vertical blanking intervals of the video information.

8. A player for a video record made by a method as claimed in Claim 4 or Claim 5 comprising a reading head (90); a drive (82, 100) for moving the reading head with respect to the record (80) a decoder (162) of frame repeat counts encoded in the recorded video signal (94); means (194) responsive to the decoded repeat count for controlling the reading head in such a manner as to read each frame of video information a selected number of times, a separator and decoder (106, 108, 110) of a plurality of audio channels recorded with each frame of video information, which is to be repeated, and a selector (130, 132) of the appropriate one of the audio channels for reproduction, based upon the value of the decoded repeat count and the number of times that a frame has already been played, characterised in that said separator and decoder includes bandpass filter means, for separating the audio channel subcarriers; a plurality of demodulators, for demodulating each subcarrier to obtain a multiplexed audio signal; demultiplexing means to derive two audio channels from a selected multiplexed audio signal.

9. A player as claimed in Claim 8 wherein said means responsive to the decoded repeat count includes: an up/down counter (158); means (150) operative when said counter is at a zero count, for incrementating said counter by the value of a decoded frame repeat count: means (154) operative when said counter is at a non-zero count, for decrementing said counter by one for each frame reproduced by said head; and means (194) for generating a read/repeat signal based on the value stored in said counter, wherein said head is directed to read a new frame when the value in said counter is zero, and to repeat a frame when the value in said counter is not zero.

10. A player as claimed in Claim 9 including means coupling said read/repeat signal to said drive to vary the speed thereof in accordance with the degree to which reproduced video information is repeated.

11. A player as claimed in Claim 10 wherein said means coupling said read/repeat signal to said drive includes a low-pass filter to minimise sudden speed changes in said drive.

12. A player as claimed in any of Claims 8—11 including a fast-response translating means capable of maintaining the reading head at a given recording track position, and capable of compensating for lagging or leading movements by said drive.

**Patentansprüche**

1. Videoaufzeichnungsgerät mit einem Aufzeichnungskopf (44); einem Antrieb (42, 46) zum Bewegen des Kopfes relativ zu einer Platte (40); einem Videosignalprozessor, der zur Erzeugung eines Aufzeichnungsgerät-Freigabesignals (72) während jedes Teilbildes eines Original-Videoprogrammes, das aufzuzeichnen ist, und einer Teilbildwiederholungszählung (74) eingerichtet ist, die für die Zahl, wie oft ein jedes solches Teilbild während einer nachfolgenden Wiedergabe wiederzugeben ist, kennzeichnend ist; einem Audiosignalprozessor (20) zur Erzeugung einer Mehrzahl von relativ zueinander um Schrittweiten von einer Teilbildzeit zeitlich verzögerten Audiokanälen; einer Einrichtung (64) zum Kombinieren der Mehrzahl der Audiokanäle mit dem Original-Videoprogramm und der Teilbildweiderholungszählung, und einer Einrichtung zur selektiven Freigabe des Antriebs und des Kopfes in übereinstimmung mit dem Zustand des Aufzeichnungsgerät-Freigabesignals, dadurch gekennzeichnet, daß der Videosignalprozessor einen Analysator (28) für das Original-Videoprogramm, der eingerichtet ist, um festzulegen, welche Teilbilder aufgezeichnet werden sollen, und wie oft ein jedes solches Teilbild wiederzugeben ist, in Abhängigkeit vom Ausmaß der Bewegung im entsprechenden Teil des Programmes; eine Einrichtung (Figur 1) zum Erzeugen eines vor-bearbeiteten Videoprogrammes (32) auf einem Videoband und enthaltend eine Angabe von Begrenzungen zwischen ausgewählten Sätzen von aufeinanderfolgenden Teilbildern, wie durch den Analysator festgelegt; eine Einrichtung (68) zum Zählen der Teilbilder in jedem Satz des wiedergegebenen vor-bearbeiteten Videoprogrammes und zum Erzeugen einer Teilbildwiederholungszählung für jeden Satz und des Aufzeichnungsgerät-Freigabesignals für jeden Satz; und eine Einrichtung zum Kodieren der Telbildwiederholungszählung mit dem wiedergegebenen vor-bearbeiteten Videoprogramm enthält.

2. Videoaufziechnungsgerät nach Anspruch 1, bei dem die Einrichtung zum Kombinieren der Mehrzahl der Audiokanäle mit dem Original-Videoprogramm und der Teilbildwiederholungszählung eine Mehrzahl von Audio-Multiplexern (58) zum Multiplexen von Paaren der Audiokanäle, eine Mehrzahl von Hilfsträgermodulatoren (62), die je ein Multiplex-Paar der Audiokanäle modulieren, und einen Modulator (64) zum Kombinieren der modulierten Hilfsträgersignale mit dem kodierte Teilbildwiederholungszählungen enthaltenden Videosignal aufweist.

3. Videoaufzeichnungsgerät nach einem der beiden vorhergehenden Ansprüche, wobei der Aufzeichnungskopf eine Laserlichtquelle (48) und einen Lasermodulator (50) zum Erzeugen eines Laser-Schreibstrahls zum Schreiben auf einer Aufzeichnungsplatte enthält, die Antriebseinrichtung eine Drehantriebseinrichtung (42) zum Drehen der Platte und eine Translationsantriebseinrichtung (46) zum Verschieben des Schreibstrahls radial zur Platte enthält.

4. Verfahren zur Herstellung einer Videoaufzeichnung, mit den Schritten, daß: ein Videoprogramm (10) bearbeitet wird, um ein Aufzeichnungsgerät-Feigabesignal (72) während jedes Teilbildes des Programms, das aufzuzeichnen ist, zusammen mit einer Teilbildwiederholungszählung (74) zu erzeugen, die für die Zahl kennzeichnend ist, wie oft im im gegebenen Fall ein jedes aufgezeichnete Teilbild während einer nachfolgenden Wiedergabe zu wiederholen ist; vom das Videoprogramm begleitenden Audiosignal (14) eine Mehrzahl von relativ zueinander um Schrittweiten von einer Teilbildzeit zeitlich verzögerten Audiokanälen erzeugt wird; ausgewählte Teilbilder des Videoprogramms, die Mehrzahl der Audiokanäle und die Telbildweiderholungszählungen elektrisch kombiniert werden, um ein zusammengesetztes elektrisches Signal zu erzeugen; das zusammengesetzte elektrische Signal an ein Aufzeichnungsgerät (50) gelegt wird; und das Aufzeichnungsgerät selektiv in übereinstimmung mit dem Aufzeichnungsgerät-Freigabesignal (72) freigegeben wird, um die ausgewählten Teilbilder des Videoprogramms je mit einem oder mehreren der Audiokanäle aufzuzeichnen, wodurch bei Wiederabspielen eines aufgezeichneten Teilbides ein ausgewählter Audiokanal gleichzeitig in übereinstimmung mit der Teilbildwiederholungszählung wiedergegeben werden kann; dadurch gekennzeichnet, daß das Programm zuerst analysiert wird, um festzulegen, welche Teilbilder aufgezeichnet werden müssen und welche übersprungen werden können; und gekennzeichnet durch das Anfertigen eines Videobandes, das alle ursprünglichen Teilbilder beinhaltet und Begrenzungssignale enthält, die Sätze von ähnlichen Teilbildern trennen; und gekennzeichnet durch nachfolgendes Abspielen des Bandes, um die Teilbildweiderholungszählungen enthaltende Videoaufzeichnung durch Verwendung der Aufzeichnungsgerät-Freigabesignale und Begrenzungssignale herzustellen.

5. Verfahren nach Anspruch 4, bei dem die Telbildwiederholungszählungen in Bildaustastintervallen des kombinierten Signales durch Erzeugen von Hochfrequenzsignalimpulsen und Kombinieren der Signalimpulse mit dem vorbearbeiteten Videosignal in einer ausgewählten Zeile des Bildaustastintervalls eingefügt werden.

6. Platte, die durch ein Verfahren gemäß Anspruch 4 oder Anspruch 5 hergestellt wurde und eine Videoaufzeichnung trägt, die aufeinanderfolgende Teilbilder von Videoinformation, Teilbildwiederholungszählungen, die je für die Zahl, wie oft ein aufgezeichnetes Teilbild wiederzugeben ist, und eine Mehrzahl von relativ zueinander um Schrittweiten von einer Telbildzeit zeitlich verzögerten, mit jedem zu wiederholenden Teilbild der Videoinformation auf eine Weise aufgezeichneten Audiokanälen enthält, die es ermöglicht, daß der geeignete Audiokanal zur Wiedergabe mit jeder Wiedergabe eines aufgezeichneten Teilbildes ausgewählt wird, dadurch gekennzeichnet, daß die Audiokanäle paarweise zeitlich gemultiplext sind.

7. Platte nach Anspruch 6, bei der die Teilbildwiederholungszählungen in Bildaustastintervallen der Videoinformation enthalten sind.

8. Wiedergabegerät für eine durch ein Verfahren nach Anspruch 4 oder Anspruch 5 hergestellte Videoplatte, mit einem Lesekopf (90); einem Antrieb (82, 100) zum Bewegen des Lesekopfes relativ zur Platte (80), einem Dekodierer (162) für im aufgezeichneten Videosignal (94) kodierte Teilbildwiederholungszählungen; einer auf die dekodierte Wiederholungszählung ansprechenden Einrichtung (194) zum Steuern des Lesekopfes in einer Weise, um jedes Teilbild der Videoinformaton eine ausgewählte Anzahl von Malen zu lesen, einem Separator und Dekodierer (106, 108, 110) für eine Mehrzahl von Audiokanälen, die mit jedem zu wiederholenden Teilbild der Videoinformation aufgezeichnet sind, und einem Selektor (130, 132) für den geeigneten Audiokanal zur Wiedergabe basierend auf dem Wert der dekodierten Wiederholungszählung und der Anzahl von Malen, wie oft ein Teilbild bereits wiedergegeben worden ist, dadurch gekennzeichnet, daß der Separator und Dekodierer eine Bandpaßfiltereinrichtung zum Trennen der Audiokanal-Hilfsträger; eine Mehrzahl von Demodulatoren zum Demodulieren jedes Hilfsträgers, um ein Multiplex-Audiosignal zu erhalten; eine Demultiplexeinrichtung zum Herleiten von zwei Audiokanälen von einem ausgewählten Multiplex-Audiosignal enthält.

9. Wiedergabegerät nach Anspruch 8, bei dem die auf die dekodierte Wiederholungszählung ansprechende Einrichtung einen Vorwärts/Rückwärts-Zähler (158); eine Einrichtung (150), die wirksam ist, wenn der Zähler bei einer Null-Zählung steht, um den Zähler um den Wert einer dekodierten Teilbildwiederholungszählung zu inkrementieren; eine Einrichtung (154), die wirksam ist, wenn der Zähler bei einer Nicht-Null-Zählung steht, um den Zähler für jedes vom Kopf wiedergegebene Teilbild um eins zu dekrementieren; und eine Einrichtung (194) zum Erzeugen eines Lese/Wiederholsignals basierend auf dem im Zähler gespeicherten Wert enthält, wobei der Kopf gerichtet wird, um ein neues Teilbild zu lesen, wenn der Wert im Zähler Null ist, und um ein Teilbild zu wiederholen, wenn der Wert im Zähler ungleich Null ist.

10. Wiedergabegerät nach Anspruch 9, mit einer Einrichtung, die das Lese/Wiederholsignal mit dem Antrieb kuppelt, um dessen Geschwindigkeit in übereinstimmung mit dem Maß zu ändern, wie die wiedergegebene Videoinformation wiederholt wird.

11. Wiedergabegerät nach Anspruch 10, bei dem die das Lese/Wiederholsignal mit dem Antrieb kuppelnde Einrichtung ein Tiefpaßfilter enthält, um plötzliche Geschwindigkeitsänderungen im Antrieb auf ein Minimum zu reduzieren.

12. Wiedergabegerät nach einem der Ansprüche 8—11, mit einer schnellansprechenden, zum Halten des Lesekopfes in einer gegebenen Aufzeichnungs-Spurposition und zum Kompensieren von Nach- oder Voreilbewegungen durch den Antrieb geeignete Verschiebungseinrichtung.

**Revendications**

1. Appareil d'enregistrement vidéo comprenant une tête d'enregistrement (44); un entraînement (42, 46) pour déplacer la tête par rapport à un disque (40); un réseau de traitement de signaux vidéo agencé pour produire un signal de validation d'enregistreur (12) pendant chaque image d'un programme vidéo d'origine qui doit être enregistré et un compte de répétition d'image (74) indiquant le nombre de fois où chaque image doit être jouée pendant une reproduction subséquente; un réseau de traitement de signaux audio (20) pour produire un certain nombre de canaux audio retardés dans le temps, les uns par rapport aux autres, d'incréments d'une durée de l'image; un moyen (64) pour combiner les divers canaux audio au programme vidéo d'origine et au compte de répétition d'image, et un moyen pour valider sélectivement ledit entraînement et ladite tête selon l'état du signal de validation d'enregistreur, caractérisé en ce que le réseau de traitement de signaux vidéo comprend; un analyseur (28) du programme vidéo d'origine agencé pour déterminer lequelles images doivent être enregistrées, et le nombre de fois où chaque image doit être jouée, selon la quantité de mouvement dans la partie correspondante du programme; un moyen (Figure 1) pour produire un programme vidéo pré-traité (32) sur bande vidéo et contenant une indication des limites entre des groupes choisis d'images consécutives qu'a déterminé l'analyseur; un moyen (50) pour subséquemment restituer le programme vidéo pré-traité de la bande vidéo; un moyen (68) pour compter les images dans chaque groupe du programme vidéo pré-traité restitué et produire un compte de répétition d'image pour chaque groupe et le signal de validation d'enregistreur pour chaque groupe; et un moyen pour coder le compte de répétition d'image avec le programme vidéo pré-traité restitué.

2. Appareil d'enregistrement vidéo selon la revendication 1 où le moyen pour combiner les divers canaux audio au programme vidéo d'origine et au compte de répétition d'image comprend: un certain nombre de multiplexeurs audio (58) pour multiplexer des paires de canaux audio, un certain nombre de modulateurs de sous-porteuse (62), dont chacun module une paire multiplexée de canaux audio et un modulateur (64) pour combiner les signaux modulés de sous-porteuse avec le signal vidéo contenant les comptes codés de répétition d'image.

3. Appareil d'enregistrement vidéo selon l'une quelconque des revendications précédentes où ladite tête d'enregistrement comprend une source de lumière laser (48) et un modulateur laser (50) pour produire un faisceau laser d'écriture pour écrire sur un disque d'enregistrement, ledit moyen d'entraînement comprend un moyen d'entraînement en rotation (42) pour faire tourner ledit disque et un moyen d'entraînement en translation (46) pour donner, au faisceau d'écriture, une transgression radiale par rapport audit disque.

4. Procédé de production d'un enregistrement vidéo comprenant les étapes de: traiter un programme vidéo (10) pour produire un signal de validation d'enregistreur (72) pendant chaque image du programme qu'il faut enregistrer, avec un compte de répétition d'image (74) indiquant le nombre de fois, s'il y en a, où chaque image enregistrée doit être répétée pendant une reproduction subséquente; produire à partir d'un signal audio (14) accompagnant le programme vidéo, un certain nombre de canaux audio retardés dans le temps les uns par rapport aux autres d'incréments d'une durée d'image; combiner électriquement les images choisies du programme vidéo, les divers canaux audio et les comptes de répétition d'image pour produire un signal électrique composite; appliquer le signal électrique composite à une appareil d'enregistrement (50); et valider sélectivement l'enregistreur selon le signal de validation de l'enregistreur (72), pour enregistrer les images choisies du programme vidéo, chacune avec un ou plusieurs des canaux audio ainsi lorsqu'une image enregistrée est rejouée, un canal audio, choisi peut être simultanément reproduit selon le compte de répétition d'image; caractérisé en ce que le programme est d'abord analysé pour déterminer lesquelles images doivent être enregistrées et lesquelles peuvent être sautées; et caractérisé en ce qu'on prépare une bande vidéo contenant toutes les images d'origine et contenant des signaux limites séparant des groupes d'images semblables; et caractérisé en ce que l'on restitue subséquemment la bande pour produire l'enregistrelent vidéo comprenant les comptes de répétition d'image en utilisant les signaux de validation d'enregistreur et les signaux limites.

5. Procédé selon la revendication 4 où les comptes de répétition d'image sont insérés dans les intervalles d'effacement vertical du signal combiné en produisant des salves de signaux à haute fréquence et en combinant les salves de signaux au signal pré-traité sur une ligne choisie de l'intervalle d'effacement vertical.

6. Disque produit par un procédé selon la revendication 4 ou la revendication 5 et portant un enregistrement vidéo contenant des images successives d'information vidéo, des comptes de répétition d'image, chacun indiquant le nombre de fois où une image enregistrée doit être reproduite, et un certain nombre de canaux audio retardés, dans le temps, les uns par rapport aux autres, d'incréments, d'une durée d'image enregistrée avec chaque image d'information vidéo qui doit être répétée d'une façon permettant au canal audio approprié d'être choisi pour une reproduction, avec chaque reproduction d'une image enregistrée, caractérisé en ce que les canaux audio sont multiplexés dans le temps, par paires.

7. Disque selon la revendication 6 où les comptes de répétition d'image sont contenus dans les intervalles d'effacement vertical de l'information vidéo.

8. Appareil de reproduction pour un disque vidéo par un procédé selon la revendication 4 ou la revendication 5 comprenant une tête de lecture (90); un entraînement (82, 100) pour déplacer la tête de lecture par rapport au disque (80) un décodeur (162) des comptes de répétition d'image codés dans le signal vidéo enregistré (94); un moyen (194) répondant au compte décodé de répétition pour commander la tête de lecture de façon à lire chaque image de l'information vidéo un nombre choisi de fois, un séparateur et décodeur (106, 108, 110) d'un certain nombre de canaux audio enregistrés avec chaque image de l'information vidéo, qu'il faut répéter, et un sélecteur (130, 132) du canal approprié pour une reproduction, en se basant sur la valeur du compte décodé de répétition et le nombre de fois où une image a déjà été jouée, caractérisé en ce que ledit séparateur et décodeur comprend un moyen formant filtre passe-bande, pour séparer les sous-porteuses du canal audio; un certain nombre de démodulateurs, pour démoduler chaque sous-porteuse pour obtenir un signal audio multiplexé; un moyen de démultiplexage pour dériver deux canaux audio d'un signal audio multiplexé choisi.

9. Appareil de reproduction selon la revendication 8 où ledit moyen répondant au compte décodé de répétition comprend: un compteur réversible (158); un moyen (150) servant, quand ledit compteur est à un compte de 0, à incrémenter ledit compteur par la valeur d'un compte décodé de répétition d'images: un moyen (154) servant, quand ledit compteur est un compte non-nul, à décrémenter ledit compteur de 1 pour chaque image reproduite par ladite tête; et un moyen (194) pour produire un signal lecture/répétition basé sur la valeur stockée dans ledit compteur, où ladite tête est dirigée pour lire une nouvelle image lorsque la valeur dans ledit compteur est 0 et pour répéter une image quand la valeur dans ledit compteur n'est pas 0.

10. Appareil de reproduction selon la revendication 9 comprenant un moyen appliquant ledit signal lecture/répétition audit entraînement pour faire varier sa vitesse selon le degré auquel l'information vidéo reproduite est répétée.

11. Appareil de reproduction selon la revendication 10 où ledit moyen appliquant ledit signal lecture/répétition audit entraînement comprend un filtre passe-bas pour diminuer des changements brusques de vitesse dans ledit entraînement.

12. Appareil de reproduction selon l'une quelconque des revendications 8 à 11 comprenant un moyen de translation à réponse rapide pouvant maintenir la tête de lecture sur une position donnée de la piste d'enregistrement, et pouvant compenser des mouvements de retard ou d'avance par ledit entraînement.

*Fig.1*

0 021 783

*Fig. 2*

Fig.3a

Fig. 3b

4

ORIG.VIDEO 1,2,3,4,5,6,7,8,9,10,11,12,13,14,15,16,17,18,19,20,21

ORIG.AUDIO 1,2,3,4,5,6,7,8,9,10,11,12,13,14,15,16,17,18,19,20,21

PREPROC. VIDEO 1,2,3,4,5,6,7,8,9,10,11,12,13,14,15,16,17,18,19,20,21

CH1 1,2,3,4,5,6,7,8,9,10,11,12,13,14,15,16,17,18,19,20,21

CH2 1,2,3,4,5,6,7,8,9,10,11,12,13,14,15,16,17,18,19,20

CH3 1,2,3,4,5,6,7,8,9,10,11,12,13,14,15,16,17,18,19

CH4 1,2,3,4,5,6,7,8,9,10,11,12,13,14,15,16,17,18

CH5 1,2,3,4,5,6,7,8,9,10,11,12,13,14,15,16,17

CH6 1,2,3,4,5,6,7,8,9,10,11,12,13,14,15,16

PREPROC. AUDIO

RECORD ENABLE

Fig.4

COMPRESS. VIDEO

| 2 3 | 5 9 | 3 13 | 0 14 | 0 15 | 4 20 |
|---|---|---|---|---|---|

COMPRESS. AUDIO

| 3 | 9 | 13 | 14 | 15 | 20 |
|---|---|---|---|---|---|
| 2 | 8 | 12 | – | – | 19 |
| 1 | 7 | 11 | – | – | 18 |
| – | 6 | 10 | – | – | 17 |
| – | 5 | – | – | – | 16 |
| – | 4 | – | – | – | – |

Fig.5

Fig.7

READ/REPEAT

ORIG.FRAME 3,3,3,9,9,9,9,9,9,13,13,13,13,14,15,20,20,20,20,20

MEMORY 2,1,0,5,4,3,2,1,0,3,2,1,0,0,0,4,3,2,1,0

LINE 11 OF VERT. SYNC.   LINE 12 OF VERT. SYNC.

Fig.6

5